# EUROPÄISCHE PATENTSCHRIFT

(11) **EP 2 479 720 B1**
(45) Veröffentlichungstag und Bekanntmachung des Hinweises auf die Patenterteilung: **19.03.2014**
(21) Anmeldenummer: 12150220.7
(22) Anmeldetag: 05.01.2012
(51) Int. Cl.: G06K 7/10, B65G 1/137, G06Q 10/08

(54) **System und Verfahren zur Lagerung und Überwachung von Gütern mittels RFID-Technologie**
System and method for storing and monitoring goods using RFID technology
Système et procédé de stockage et de surveillance de marchandises à l'aide de la technologie RFID

(30) Priorität: 24.01.2011 DE 102011003029
(43) Veröffentlichungstag der Anmeldung: 25.07.2012
(73) Patentinhaber: Deutsche Post AG, 53113 Bonn (DE)
(72) Erfinder: Zehnpfennig, Michael, 53859 Niederkassel (DE)
(74) Vertreter: Jostarndt, Hans-Dieter

(56) Entgegenhaltungen:
- WO-A1-2008/055761
- US-A1- 2005 043 854

## Beschreibung

Die Erfindung betrifft ein System zur Lagerung und Überwachung von Gütern, umfassend wenigstens eine Lagerebene, auf der die Güter an definierten Positionen platzierbar sind, so dass jedes Gut einer definierten Position zugeordnet ist. Jedes Gut ist dabei jeweils mit wenigstens einem passiven RFID-Transponder versehen, und das System umfasst wenigstens ein Lesegerät zur Erfassung dieser RFID-Transponder an den Gütern. Das wenigstens eine Lesegerät steht in Verbindung mit einer Datenverarbeitungseinheit, welche Mittel zur Auswertung erfasster RFID-Signale der RFID-Transponder aufweist, und jeder Lagerebene des Systems sind wenigstens zwei Lesegeräte zugeordnet, die Transponder auf der betreffenden Lagerebene erfassen können.

Die Erfindung betrifft ferner ein Verfahren zur Überwachung von Gütern in einem solchen System, bei dem die Auswertung der RFID-Signale durch die Datenverarbeitungseinheit eine Zuordnung von RFID-Transpondern und den ihnen zugeordneten Gütern zu einer Position auf einer Lagerebene beinhaltet.

Im Bereich der Logistik wird verstärkt dazu übergegangen, zur Überwachung des Bestands eines Lagers und der Güterbewegungen innerhalb eines Lagers RFID-Technologie einzusetzen. Diese Technologie hat den Vorteil, dass Positionen und Bewegungen von Gütern berührungslos überwacht werden können. Dabei werden beispielsweise einzelne Güter, Behälter und/oder Paletten mit RFID-Transpondern versehen und im Lager wird eine Infrastruktur aus Lesegeräten installiert. Will man nur den Güterzufluss und Güterabfluss aus einem Lager überwachen, können RFID-Schleusen an den Ein- und Ausgängen des Lagers ausreichen, wodurch registriert werden kann, wenn Güter diese Schleusen passieren. Will man jedoch auch die Position von Gütern innerhalb eines Lagers bestimmen können, müssen innerhalb des Lagers weitere Lesegeräte vorhanden sein. Bei Regallagern bzw. Hochregallagern ist es dabei erforderlich, Regaleinheiten mit der notwendigen Anzahl von RFID-Lesegeräten auszustatten, um alle Regalböden vollständig ausleuchten zu können, d.h. RFID-Transponder auf allen Regalböden erfassen zu können.

Um eine sichere Erfassung von RFID-Transpondern auf Regalböden eines Regallagers zu gewährleisten, müssen jedoch bei der Ausstattung eines Regallagers bestimmte Umgebungsbedingungen, wie leitende Materialen des Regallagers, Abschirmungen, Abstände zwischen Regalbauteilen und Gütern, Überschneidungen von Wechselfeldern der Lesegeräte, etc., beachtet werden, woraus sich üblicherweise die Anzahl der erforderlichen Lesegeräte, deren Anordnung im Regallager sowie die zu verwendenden Frequenzen ergeben, die außerdem innerhalb erlaubter Frequenzbänder liegen müssen.

Aus der US 2005/0043854 A1 ist eine Lagersystem mit vorzugsweise horizontalen Regalböden bekannt. Die auf den Regalböden befindlichen Gegenstände sind jeweils mit einem RFID Tag versehen. Zur Erfassung der Position der auf Lagerregalen befindlichen Gegenständen wird eine Antenne entlang des Regalsystems verfahren. Die Antenne wird dabei horizontal bzw. in horizontaler und vertikaler Richtung verfahren. Durch Abfahren des Regalsystems werden die in dem Regalsystem befindlichen Gegenstände in zeitlicher Abfolge nacheinander erfasst. Aufgrund der Bewegung der Antenne ist die Genauigkeit, mit der die Position eines in dem Regalsystem befindlichen Gutes ermittelt werden kann, begrenzt.

Aus der WO 2008/055761 A1 ist eine Anordnung und ein Verfahren bekannt, bei dem eine Volumeneinheit durch Erfassungseinheiten abgetastet und dadurch Mittel zur Datenabgabe aktiviert werden. Als Erfassungseinheiten erzeugen elektromagnetische Wechselfelder, die sich überlagen und deren Stärke variierbar ist. Durch die Überlagerung der Wechselfelder wird in einem Volumensegment eine Feldstärke oberhalb einer vorbestimmten Feldstärke erreicht. Oberhalb dieser vorbestimmten Feldstärke wird in dem Mitte eine so große Spannung indiziert, so dass das Mittel Daten abgibt, die wiederum von der Erfassungseinheit empfangen werden.

Die deutsche Gebrauchsmusterschrift DE 20 2007 009 056 U1 offenbart ein Materiallager, dessen Inhalt mittels RFID-Technologie überwacht wird, wobei leitende Teile des Regals nicht die Sende- und Empfangseigenschaften einer Ringantenne beeinflussen sollen. Aus der internationalen Patentanmeldung WO 2008/027650 A2 sind ferner RFID-Systeme bekannt, die vorteilhaft für ein solches Lager verwendet werden können, in dem eine Vielzahl von RFID-Transpondern durch mehrere Lesegeräte erfasst werden muss.

Insbesondere bei der Bestimmung der Position von Gütern auf definierten Stellplätzen eines Regallagers ist oftmals das Problem zu lösen, dass RFID-Transponder dieser Güter aufgrund der Überschneidung von Wechselfeldern der Lesegeräte nicht nur von einem Lesegerät, sondern gleichzeitig von mehreren Lesegeräten gelesen werden können. Dies kann eine exakte Bestimmung der Position des betreffenden Guts erschweren, wenn jeder definierten Position auf einer Lagerebene ein Lesegerät zugeordnet ist. Verkleinert man den Abstrahlwinkel der Wechselfelder, um derartige Überschneidungen zu vermeiden, bedingt diese Vorgehensweise eine hohe Anzahl von Lesegeräten. Allerdings sind insbesondere die Lesegeräte eines RFID-Systems kostenintensiv in der Anschaffung und im Betrieb, so dass sich diese Vorgehensweise bei großen Lagern nachteilig auswirkt.

Wenn in einem Regalsystem Güter verschiedener Größe ein- und ausgelagert werden, erfordert dies ebenfalls eine Vielzahl von Lesegeräten, um eine vollständige Erfassung dieser Güter zu gewährleisten, da die Position der Güter auf den verfügbaren Stellplätzen und damit der Abstand der zugehörigen RFID-Transponder zu den am Regalsystem angebrachten Lesegeräten variieren kann. Dies ist insbesondere bei der Verwendung von Industriepaletten und Europaletten der Fall, die unterschiedliche Abmessungen aufweisen, so dass auf einem Regalboden üblicherweise mehr Europaletten nebeneinander gelagert werden können als Industriepaletten. Sollen beide Varianten überwachbar sein, muss üblicherweise eine Vielzahl von Lesegeräten am jeweiligen Regalboden angebracht werden, um Transponder an den verschiedenen möglichen Positionen auf einem Regalboden erfassen und auch lokalisieren zu können. Dies führt zu hohen Kosten und erhöht das Problem der sich überschnei überschneidenden Wechselfelder von Lesegeräten, was wiederum die Bestimmung der genauen Position von Gütern in einem Lager erschwert.

Aufgabe der Erfindung ist es daher, ein System zur sicheren Überwachung und Lokalisierung von Gütern in einem Lager bereitzustellen, das eine möglichst geringe Anzahl von Lesegeräten erfordert.

Ferner ist es Aufgabe der Erfindung, ein Verfahren zur sicheren Überwachung von Gütern in einem solchen System bereitzustellen, mit dem sich der Stellplatz eines Gutes auf einer Lagerebene ermitteln lässt.

Erfindungsgemäß wird diese Aufgabe durch ein System mit den Merkmalen des unabhängigen Anspruches 1 gelöst. Vorteilhafte Weiterbildungen des Systems ergeben sich aus den Unteransprüchen 2-6. Die Aufgabe wird ferner durch ein Verfahren nach Anspruch 7 gelöst. Vorteilhafte Ausführungsformen des Verfahrens ergeben sich aus den Unteransprüchen 8 - 12.

Die Erfindung umfasst ein System zur Lagerung und Überwachung von Gütern, umfassend wenigstens eine Lagerebene, auf der die Güter an definierten Positionen platzierbar sind, so dass jedes Gut einer definierten Position zugeordnet ist. Dabei sind die Güter jeweils mit wenigstens einem passiven RFID-Transponder versehen, und das System umfasst wenigstens ein Lesegerät zur Erfassung dieser RFID-Transponder. Das wenigstens eine Lesegerät steht in Verbindung mit einer Datenverarbeitungseinheit, welche Mittel zur Auswertung erfasster RFID-Signale der RFID-Transponder aufweist, und jeder Lagerebene sind wenigstens zwei Lesegeräte zugeordnet.

Ein Lesegerät im Sinne dieser Erfindung ist dadurch gekennzeichnet, dass es mindestens eine Antenne an ein RFID-Lesegerät koppelt und dadurch in der Lage ist, mit einem passiven RFID-Transponder gemäß den jeweils gültigen lokalen Funk-Regularien zu kommunizieren. Sind mehrere Antennen an das RFID-Lesegerät angeschlossen, so bezeichnet der Begriff Lesegerät im Sinne dieser Erfindung jeweils eine Antenne, da deren Position, Winkel und technische Eigenschaften die Erfassung eines RFID-Transponders maßgeblich beeinflussen.

Als Güter im Sinne dieser Erfindung werden sowohl Waren, Produkte, Rohstoffe, Behälter, Transportpaletten, etc. angesehen.

Erfindungsgemäß sind die definierten Positionen für Güter nebeneinander in einer Reihe auf einer Lagerebene angeordnet, und die Lesegeräte entlang dieser Reihe von definierten Positionen verschiebbar und/oder in Bezug zu dieser schwenkbar ausgeführt. Ferner ist wenigstens ein Lesegerät so ausgeführt, dass das Energieniveau des ausgestrahlten Wechselstromfeldes dieses Lesegerätes variierbar ist. Durch die Verschiebbarkeit und/oder Schwenkbarkeit wenigstens eines der Lesegeräte kann die Lage der Lesegeräte so verändert werden, dass die gleichen Lesegeräte für eine geringere oder höhere Anzahl von möglichen Positionen auf einer Lagerebene eingesetzt werden können. Die Lage der Lesegeräte kann dadurch so variiert werden, dass sie mit der erforderlichen Genauigkeit an verschiedene Situationen auf einer Lagerebene angepasst werden können. Dies kann beispielsweise durch eine Verschiebbarkeit wenigstens eines Lesegerätes erreicht werden, durch welche sich der Abstand zwischen Lesegeräten und der Abstand von Lesegeräten zu Positionen auf einer Lagerebene verändern lässt. Durch eine Schwenkbarkeit von Lesegeräten kann die Richtung des ausgestrahlten Wechselfeldes eines Lesegerätes verändert werden, was ebenfalls für die Anpassung der Lesegeräte an eine andere Stellplatzsituation auf einer Lagerebene eingesetzt werden kann. Beide Varianten können auch kombiniert verwendet werden.

Schwenkbarkeit im Sinne dieser Erfindung ist dadurch gekennzeichnet, dass einerseits die Lesegeräte so beweglich gelagert sind, dass manuell oder automatisch ein beliebiger Schwenkwinkel frei einstellbar ist. Andererseits kann Schwenkbarkeit im Sinne dieser Erfindung auch bedeuten, dass ein fest installiertes Lesegerät zum Schwenken erst demontiert und dann wieder montiert werden muss, wobei beispielsweise durch die Befestigung vorgegebene Schwenkwinkel eingestellt werden können.

Somit ist dabei wenigstens ein Lesegerät durch Verschieben und/oder Verschwenken aus einer ersten Lage in eine zweite Lage bewegbar, wobei in der ersten Lage bei Belegung aller Positionen der zugeordneten Lagerebene mit Gütern kein RFID-Transponder gleichzeitig von zwei benachbarten Lesegeräten erfassbar ist, während in der zweiten Lage bei Belegung aller Positionen dieser Lagerebene mit Gütern wenigstens ein RFID-Transponder gleichzeitig von zwei benachbarten Lesegeräten erfassbar ist. Die erste Lage bezeichnet dabei eine Lage der Lesegeräte, die noch für eine andere Situation auf der Lagerebene eingestellt ist, was für eine neue Situation auf der Lagerebene dazu führt, dass bei Belegung aller Positionen der zugeordneten Lagerebene mit Gütern kein RFID-Transponder gleichzeitig von zwei benachbarten Lesegeräten erfassbar ist. Dies ist jedoch nachteilig, da es für die Erfindung erforderlich ist, dass bei Belegung aller Positionen dieser Lagerebene mit Gütern wenigstens ein RFID-Transponder gleichzeitig von zwei benachbarten Lesegeräten erfassbar ist. Daher wird wenigstens ein Lesegerät durch Verschieben und/oder Verschwenken in eine zweite Lage bewegt, die an die neue Situation auf der Lagerebene angepasst ist und dadurch gekennzeichnet ist, dass bei Belegung aller Positionen dieser Lagerebene mit Gütern eben wenigstens ein RFID-Transponder gleichzeitig von zwei benachbarten Lesegeräten erfassbar ist.

Vorzugsweise ist die Energiehöhe des ausgestrahlten Wechselstromfeldes bei wenigstens einem Lesegerät so zwischen zwei Randwerten variierbar, dass bei Belegung aller Positionen der zugeordneten Lagerebene mit Gütern wenigstens ein RFID-Transponder bei einem Wert der Energiehöhe von einem Lesegerät erfassbar ist, während der gleiche RFID-Transponder bei einem niedrigeren Wert der Energiehöhe nicht erfassbar ist. Dadurch kann bei RFID-Transpondern, die von zwei benachbarten Lesegeräten erfassbar sind, ermittelt werden, welchem Lesegerät der betreffende Transponder näher ist. Weiter entfernte Transponder können bei niedrigeren Energieniveaus nicht mehr gelesen werden, während dies für nähere Transponder noch der Fall ist, so dass aus den erfassten bzw. nicht mehr erfassten RFID-Signalen auf den ungefähren Abstand von Transpondern zu Lesegeräten geschlossen werden kann. In einem Ausführungsbeispiel der Erfindung ist das Energieniveau des Wechselfeldes des wenigstens einen Lesegerätes zwischen näherungsweise 2 Watt (ERP - Effective Radiated Power) und näherungsweise 50 Milliwatt (ERP) variierbar.

Die zum Aktivieren eines RFID-Transponders erforderliche Leistung ist dabei beispielsweise abhängig vom verwendeten RFID-Chip im Transponder, von der Güte der Antenne des Transponders sowie von der Energieeinkopplung in die Antenne und vom Untergrund, auf dem der RFID-Transponder aufgebracht ist. Bei der Wahl der Randwerte ist zu beachten, dass einerseits eine an der unteren Grenze gewählte minimale Leistung zwar ausreicht, um einen in der Nähe angeordneten RFID-Transponder zu aktivieren, ein weiter entfernt angeordneter RFID-Transponder hingegen mit dieser Leistung möglicherweise nicht aktivierbar ist. Andererseits kann es auch möglich sein, dass eine an der oberen Grenze gewählte maximale Leistung zur unerwünschten überlappenden Erfassung von RFID-Transpondern in anderen Lagerebenen oder auch zur Erfassung von RFID-Transpondern bei deren Transport an der Lagerebene vorbei führen kann.

Vorzugsweise verläuft eine Lagerebene horizontal und wenigstens zwei Lesegeräte sind oberhalb der Lagerebene und der Güter angeordnet, wobei die RFID-Transponder jeweils im oberen Bereich der Güter angebracht sind. Dabei können die wenigstens zwei Lesegeräte an einer Halterung angeordnet sein, die parallel zur Lagerebene verläuft, wobei die Halterung eine Schiene umfasst, innerhalb der das wenigstens eine Lesegerät verschiebbar angebracht ist. So können die Güter auf einfache Weise auf einer Lagerebene abgestellt bzw. wieder entfernt werden und diese Lagerebene von oben ausgeleuchtet werden.

Die Erfindung umfasst ferner ein Verfahren zur Überwachung von Gütern in einem solchen System, bei dem Signale der Lesegeräte zur Auswertung an eine Datenverarbeitungseinheit übermittelt werden, wobei die Auswertung eine Zuordnung von RFID-Transpondern und den ihnen zugeordneten Gütern zu einer Position auf einer Lagerebene beinhaltet.

Erfindungsgemäß wird wenigstens ein Lesegerät durch Verschieben und/oder Verschwenken aus einer ersten Lage in eine zweite Lage bewegt, wobei in der ersten Lage bei Belegung aller Positionen der zugeordneten Lagerebene mit Gütern kein RFID-Transponder gleichzeitig von zwei benachbarten Lesegeräten erfassbar ist, während in der zweiten Lage bei Belegung aller Positionen dieser Lagerebene mit Gütern wenigstens ein RFID-Transponder gleichzeitig von zwei benachbarten Lesegeräten erfassbar ist. In der zweiten Lage wird dann die Energiehöhe des ausgestrahlten Wechselstromfeldes bei wenigstens einem Lesegerät zwischen zwei Randwerten variiert, wobei wenigstens ein RFID-Transponder bei einem Wert der Energiehöhe von einem Lesegerät erfasst wird, während der gleiche RFID-Transponder bei einem niedrigeren Wert der Energiehöhe nicht erfasst wird. In einem Ausführungsbeispiel der Erfindung wird bei der Variation des Energieniveaus wenigstens eines Lesegerätes das Energieniveau des Wechselfeldes dieses Lesegerätes schrittweise von näherungsweise 2 Watt (ERP) auf näherungsweise 50 Milliwatt (ERP) reduziert.

Diese Vorgehensweise hat den Vorteil, dass die Lesegeräte durch Verschieben und/oder Verschwenken aus einer für die Lokalisierung nachteiligen Lage in eine Lage gebracht werden, in der eine Lokalisierung möglich ist, wobei diese zweite Lage dadurch gekennzeichnet ist, dass bei Belegung aller Positionen dieser Lagerebene mit Gütern wenigstens ein RFID-Transponder gleichzeitig von zwei benachbarten Lesegeräten erfassbar ist. In dieser zweiten Lage können die mehrfach erfassten Transponder dadurch genauer lokalisiert werden, dass sie bei einer Variation des Energieniveaus entweder noch erfasst werden oder nicht, woraus sich wiederum auf den Abstand eines Transponders zu einem Lesegerät und damit auf die Position des zugehörigen Guts schließen lässt.

Die Lesegeräte können dabei in einem ersten Überwachungszeitraum in der ersten Lage angeordnet werden, wobei Güter einer Lagerebene an einer bestimmten Anzahl von definierten Positionen auf dieser Lagerebene platzierbar sind, während die Lesegeräte in einem zweiten Überwachungszeitraum in der zweiten Lage angeordnet werden, und in dem zweiten Überwachungszeitraum Güter an einer anderen Anzahl an definierten Positionen auf der gleichen Lagerebene platzierbar sind als im ersten Überwachungszeitraum. Die Situationen auf einer Lagerebene, an welche die Lage der Lesegeräte angepasst werden muss, unterscheiden sich somit durch die Anzahl von definierten Positionen für Güter auf einer Lagerebene. Ändert sich die Anzahl der definierten Positionen auf einer Lagerebene, werden die Lesegeräte entsprechend verschoben bzw. geschwenkt, um auch für eine geänderte Anzahl von Positionen und damit Gütern eine zuverlässige Lokalisierung zu ermöglichen.

Dabei wird die Anzahl der Positionen auf einer Lagerebene in Abhängigkeit von der Größe der Güter gewählt. Für schmalere Güter können mehr Stellplätze auf einer Lagerebene definiert werden als für breitere Güter, wobei beispielsweise zwischen drei und vier möglichen Stellplätzen unterschieden wird.

Um eine Lokalisierung von Gütern auf einer Lagerebene zu erreichen, ist vorzugsweise vorgesehen, dass die Datenverarbeitungseinheit bei der Auswertung von RFID-Signalen der Lesegeräte unterscheidet zwischen RFID-Transpondern, die von nur einem Lesegerät erfassbar sind und RFID-Transpondern, die gleichzeitig von zwei Lesegeräten erfassbar sind. Ein RFID-Transponder, der von nur einem Lesegerät erfasst wird, wird dabei einer Position auf der Lagerebene im Bereich dieses Lesegerätes zugeordnet, die außerhalb des Erfassungsgebietes der anderen Lesegeräte der jeweiligen Lagerebene liegt, während ein RFID-Transponder, der gleichzeitig von zwei benachbarten Lesegeräten erfasst wird, einer Position zugeordnet wird, die im Schnittbereich der Erfassungsgebiete dieser zwei benachbarten Lesegeräten liegt.

Diese letztgenannte Zuordnung von mehrfach erfassten Transpondern kann die eindeutige Zuordnung zu einer Position oder die Zuordnung zu zwei möglichen Positionen umfassen. Um zwei mögliche Positionen zu konkretisieren, ist vorgesehen, dass ein RFID-Transponder, der von zwei benachbarten Lesegeräten erfasst wird, nach Variation des Energieniveaus wenigstens eines dieser beiden Lesegeräte derjenigen Position im Schnittbereich der Erfassungsgebiete dieser zwei benachbarten Lesegeräten zugeordnet wird, die näher an dem Lesegerät liegt, mit dem der betreffende RFID-Transponder sowohl bei einem höheren als auch bei einem niedrigeren Energieniveau erfasst wird. Vor der Variation des Energieniveaus wenigstens eines Lesegerätes kann somit für einen RFID-Transponder, der gleichzeitig von zwei benachbarten Lesegeräten erfasst wird, noch unklar sein, auf welcher von zwei Positionen er sich befindet. Die Variation des Energieniveaus kann dann vorteilhaft dazu genutzt werden, um die Abstände von RFID-Transpondern zu den beiden benachbarten Lesegeräten abzuschätzen, woraus wiederum die entsprechende Position eines RFID-Transponders genauer ermittelbar ist.

In einem Ausführungsbeispiel der Erfindung wird die Variation des Energieniveaus wenigstens eines Lesegerätes dadurch ausgelöst, dass ein bisher nicht erfasster RFID-Transponder auf der Lagerebene von wenigstens einem Lesegerät erfasst wird. Kommt auf einer Lagerebene also ein neuer Transponder hinzu, wird eine Variation des Energieniveaus durchgeführt. Die Variation des Energieniveaus wenigstens eines Lesegerätes kann ferner insbesondere dadurch ausgelöst werden, dass ein bisher nicht erfasster RFID-Transponders auf der Lagerebene von zwei benachbarten Lesegeräten gleichzeitig erfasst wird. Diese Vorgehensweisen haben den Vorteil, dass eine Variation des Energieniveaus eines Lesegerätes nur durchgeführt wird.

Durch die Erfindung wird erreicht, dass in einem Lagersystem mit möglichst wenig Lesegeräten die Position von Gütern auf Lagerebenen bestimmt werden kann, wobei die Anzahl der möglichen Positionen auf einer Lagerebene und damit die Position von Gütern auf der betreffenden Lagerebene veränderlich sein kann. Insbesondere können mit zwei Lesegeräten drei oder vier größere Güter wie Paletten auf einer Lagerebene erfasst und lokalisiert werden, wobei sowohl für drei mögliche Stellplatzpositionen als auch für vier mögliche Stellplatzpositionen nur zwei Lesegeräte erforderlich sind.

Die Verschiebbarkeit und/oder Verschwenkbarkeit von Lesegeräten ermöglicht dabei die vollständige und verlässliche Erfassung aller RFID-Transponder auf einer Lagerebene in verschiedenen Stellplatzsituationen, wobei eine mehrfache Erfassung von RFID-Transpondern nicht nur in Kauf genommen wird, sondern vorteilhaft für eine Lokalisierung genutzt wird, indem eine erste Positionsbestimmung durch eine Unterscheidung zwischen einfach und zweifach erfassten RFID-Transpondern erfolgt. Das Problem der mehrfach erfassten RFID-Transponder wird durch die Variation des Energieniveaus von Lesegeräten gelöst.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: einen Regalboden eines Regallagers mit drei Industriepaletten und der vorteilhaften Anordnung von zwei Lesegeräten;
- Fig. 2: einen Regalboden eines Regallagers mit vier Europaletten und der nachteiligen Anordnung von zwei Lesegeräten gemäß Fig. 1;
- Fig. 3: einen Regalboden eines Regallagers mit vier Europaletten und der Anordnung von zwei verschobenen Lesegeräten;
- Fig. 4: einen Regalboden eines Regallagers mit vier Europaletten und der Anordnung von zwei verschobenen und geschwenkten Lesegeräten;
- Fig. 5: einen Regalboden eines Regallagers mit vier Europaletten und der Anordnung eines verschobenen Lesegerätes;
- Fig. 6: einen Regalboden eines Regallagers mit vier Europaletten und der Anordnung eines geschwenkten Lesegerätes;
- Fig. 7: einen Regalboden eines Regallagers gemäß Fig. 3 mit Variation des Energieniveaus beider Lesegeräte und mit den damit verbundenen unterschiedlichen Aktivierungsreichweiten;
- Fig. 8: einen Regalboden eines Regallagers gemäß Fig. 7 in einem Ausführungsbeispiel mit unvollständiger Belegung der Stellplätze;
- Fig. 9: einen Regalboden eines Regallagers in einem Ausführungsbeispiel mit Gütern unterschiedlicher Höhe und mit Variation des Energieniveaus eines Lesegerätes; und
- Fig. 10: einen Regalboden eines Regallagers in einem Ausführungsbeispiel mit Gütern unterschiedlicher Höhe und mit Variation des Energieniveaus beider Lesegeräte.

Das erfindungsgemäße System kann beispielsweise in einem Regalsystem mit mehreren horizontalen Lagerebenen realisiert werden, in dem vorzugsweise mehrere übereinander angeordnete Regalböden vorgesehen sind, die horizontal verlaufen und auf denen Güter einzeln platziert werden können. Das System kann jedoch auch in anderen Arten von Lagern eingesetzt werden, wobei eine Lagerebene auch vertikal verlaufen könnte, wenn daran übereinander mehrere Güter angebracht werden können. Beispielsweise könnten Güter an verschiedenen definierten Positionen in eine vertikal verlaufende Schiene eingehängt werden.

Die Erfindung soll jedoch anhand eines Lagersystems mit wenigstens einer horizontal verlaufenden Lagerebene erläutert werden, wobei auch der Boden einer Halle als untere Lagerebene anzusehen ist. Werden auf einem Hallenboden an definierten Positionen Güter abgestellt und diese sollen überwacht werden, eignet sich die Erfindung hierzu ebenso wie zur Überwachung von Regalen mit wenigstens einem Regalboden oberhalb eines Hallenbodens. Insbesondere bei Regalsystemen mit mehreren übereinander angeordneten Regalböden kann die Erfindung jedoch vorteilhaft dazu eingesetzt werden, um Güter auf allen definierten Stellplätzen des Regallagers zu überwachen. Die Höhe der Regalböden und damit des gesamten Regalsystems kann auch so gewählt sein, dass jeder Regalboden von einer Person manuell erreichbar ist. In diesem Fall werden nur Güter kleinerer Ausmaße in einem solchen Regallager gelagert, wobei es sich beispielsweise auch um Kartons oder Behälter mit darin befindlichen Kleingütern handeln kann.

Es kann sich jedoch auch um ein größeres Hochregallager handeln, dessen obere Regalböden üblicherweise nur mit Gabelstaplern zugängig sind. In einem solchen Hochregallager werden Güter typischerweise auf Paletten ein- und ausgelagert, und in einer zentralen Datenverarbeitungsanlage wird protokolliert, welche Palette mit welchen Gütern an welchem Stellplatz im Regallager positioniert ist. So kann zum einen der gesamte Güterbestand im Lager erfasst werden, als auch Gabelstapler bzw. deren Fahrer entsprechend angesteuert werden, um bestimmte Paletten gezielt von einem Stellplatz auslagern zu können.

Um eine funkbasierte Überwachung von Gütern in einem Lager zu erreichen, wird erfindungsgemäß eine RFID-Technologie eingesetzt und jedes Gut mit einem RFID-Transponder, nachfolgend auch kurz Transponder genannt, versehen. Das Regallager wird ferner mit einer Vielzahl von Lesegeräten ausgestattet, um die Transponder der Güter im Regalsystem erfassen zu können. Im Transponder ist eine eindeutige Kennung hinterlegt, die in einer zentralen Datenverarbeitungsanlage direkt einem Gut zugeordnet sein kann. Bei Gütern, die in Behältern oder auf Paletten kommissioniert sind, ist die eindeutige Kennung dem jeweiligen Transport- bzw. Aufbewahrungsmittel zugeordnet und in der zentralen Datenverarbeitungsanlage ist hinterlegt, welche Güter wiederum diesem Transportmittel zugeordnet sind. So ist über die Überwachung des Transportmittels auch eine Überwachung der damit verbundenen Güter möglich.

Dies hat gegenüber einer visuellen Kennzeichnung beispielsweise von Paletten den Vorteil, dass der Gabelstaplerfahrer eine Palette nicht im Lager suchen muss, wenn er sie auslagern soll, sondern ihm kann mitgeteilt werden, an welchem Stellplatz in welchem Regal sich eine bestimmte Palette befindet und der Gabelstaplerfahrer kann diese Palette anfahren und aufnehmen, ohne dass er Informationen von der Palette ablesen muss. Dies erfordert natürlich, dass der Stellplatz der Palette genau bekannt ist und dem Fahrer des Gabelstaplers angezeigt werden kann.

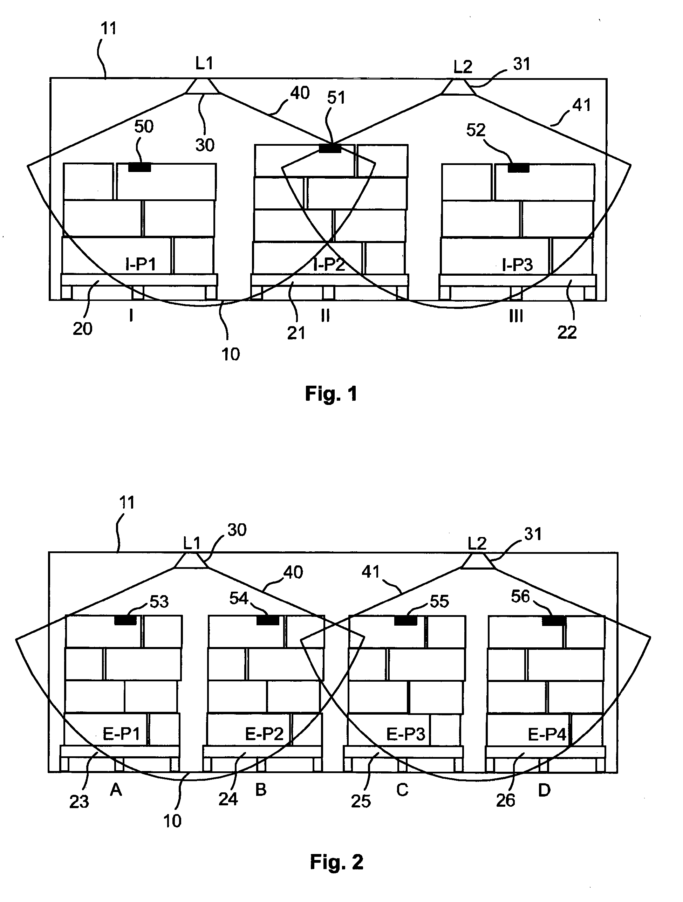

In Fig. 1 ist zur Erläuterung der Erfindung beispielhaft ein Regalboden 10 dargestellt, auf dem drei Paletten 20, 21 und 22 mit Gütern an drei Stellplätzen I, II und III abgestellt sind. Bei diesen Paletten handelt es sich beispielsweise um drei Industriepaletten (I-P1, I-P2, I-P3), die Abmessungen von 1200mm x 1000mm aufweisen. Aufgrund dieser Abmessungen ergeben sich auf dem Regalboden 10 drei definierte Stellplätze I, II und III, an denen Paletten abgestellt werden können. Jede Palette ist mit Gütern beladen, die beispielsweise durch eine Schrumpffolie und/oder Bänder an der Palette befestigt sind. Direkt an einer Palette oder den darauf befindlichen Gütern ist ein Transponder angebracht. In dem in der Fig. 1 dargestellten Ausführungsbeispiel der Erfindung ist an den Gütern jeder Palette 20, 21 und 22 im oberen Bereich jeweils ein Transponder 50, 51 und 52 angebracht. Diese Anordnung ist vorteilhaft, wenn die zugehörigen Lesegeräte oberhalb der Paletten an einer horizontalen Halterung 11 angebracht sind, wie es in diesem Ausführungsbeispiel mit den beiden Lesegeräten 30 und 31 der Fall ist. Die Halterung 11 kann beispielsweise durch eine Strebe oder den nächst höheren Regalboden gebildet werden, an der/dem die Lesegeräte 30 und 31 angebracht werden.

Die Lesegeräte können jedoch auch hinter den Paletten angebracht sein, wobei die Transponder in diesem Fall ebenfalls im hinteren Bereich an den Paletten angeordnet sein sollten. Auch eine Anbringung von Lesegeräten unterhalb der Paletten ist möglich, wobei die Transponder in diesem Fall unten an den Paletten angebracht sein sollten. Insbesondere bei Gütern und/oder Verpackungen aus Materialien, die abschirmend wirken und so die verlässliche Erfassung von Transponder erschweren, hat es sich jedoch als vorteilhaft erwiesen, dass die Transponder oben an einem Gut angebracht werden. So können sie von darüber befindlichen Lesegeräten oberhalb des Gutes erfasst werden, auch wenn die Güter unterschiedliche Höhen haben bzw. Paletten unterschiedlich hoch mit Gütern beladen sind. Der jeweilige Transponder wird dann an der Oberseite der beladenen Palette angebracht, wobei er vorzugsweise von der Oberseite absteht, um negative Beeinflussungen durch den Inhalt und das Material der Palette zu vermeiden und den Transponder zuverlässig erfassen zu können.

Der Transponder kann aber auch an der vorderen Oberkante der Palette angebracht werden, was den Vorteil hat, dass er auch von vorne zu sehen ist. Ist der Transponder beispielsweise in ein aufklebbares Label integriert, das zusätzlich bedruckt werden kann, können diese aufgedruckten Informationen von vorne abgelesen werden. Ferner kann von vorne geprüft werden, ob die Palette mit einem Transponder versehen ist. Auch bei Anbringung des Transponders an der vorderen Oberkante einer Palette steht der Transponder vorzugsweise nach oben ab, um negative Beeinflussungen durch den Inhalt und das Material der Palette zu vermeiden und den Transponder zuverlässig erfassen zu können.

In den Figuren ist ein Transponder stets vorne und unterhalb der vorderen Oberkante an einer Palette angebracht, jedoch dient dies nur der Vereinfachung der Darstellung und ist nicht als Beschränkung anzusehen. Die Anbringung des Transponders richtet sich nach dem jeweiligen Anwendungsfall und der Ausgestaltung der Palette, wobei lediglich die Ausrichtung des Transponders zum Lesegerät bzw. des Lesegerätes zum Transponder so gewählt werden sollte, dass der Abstand möglichst kurz ist bzw. keine negativen Abschirmungen auftreten.

Als RFID-Transponder können handelsübliche Transponder verwendet werden, die vom Fachmann entsprechend ausgestaltet sein können, wobei vorzugsweise passive Transponder ohne eigene Stromversorgung eingesetzt werden. Der Aufbau eines RFID-Transponders sieht prinzipiell eine Antenne, einen analogen Schaltkreis zum Empfangen und Senden (Transceiver), sowie einen digitalen Schaltkreis und einen permanenten Speicher vor. Die verwendeten RFID-Transponder arbeiten beispielsweise im Bereich der Langwelle bei 125-134 kHz, der Kurzwelle bei 13,56 MHz, der UHF bei 865-869 MHz bzw. 950 MHz oder der SHF bei 2,45 GHz und 5,8 GHz.

Vorzugsweise werden für die Erfindung passive UHF-Transponder eingesetzt, da diese besonders kostengünstig sind, einfach an einer Palette angebracht werden können und auch von vielen Firmen genutzt werden. Dadurch müssen beispielsweise keine weiteren Transponder mehr an der Palette angebracht werden, wenn Paletten bereits mit Transpondern versehen das Lager erreichen. Vielmehr besteht dann die Möglichkeit, diese Transponder weiter zu nutzen und so zusätzlich Kosten zu sparen.

Im Regalsystem sind mehrere Lesegeräte angebracht, die jeweils ein hochfrequentes elektromagnetisches Wechselfeld erzeugen, dem die Transponder der Güter im Bereich dieses Wechselfeldes ausgesetzt sind. Die vom Transponder über die Antenne aufgenommene Energie dient während des Kommunikationsvorganges als Stromversorgung für den Transponder. Der so aktivierte Mikrochip im Transponder decodiert die vom Lesegerät gesendeten Befehle und codiert und moduliert die Antwort in das eingestrahlte elektromagnetische Feld. Damit überträgt der Transponder wenigstens seine eigene unveränderliche Seriennummer oder auch weitere Daten des gekennzeichneten Guts an das Lesegerät, so dass das betreffende Lesegerät Transponder im Bereich seines Wechselfeldes erfassen und identifizieren kann.

Die Reichweite des Lesegerätes hängt dabei im Wesentlichen von der Energie des Wechselfeldes ab, wobei es sich bei Betrieb eines Hochregallagers als vorteilhaft erwiesen hat, dass ein Lesegerät eine Leistung von bis zu 2 Watt (ERP) aussenden kann. Hierbei steht die Abkürzung ERP für *Effective Radiated Power* oder *Equivalent Radiated Power,* was eine standardisierte theoretische Maßeinheit für die effektive Strahlungsleistung darstellt. Die effektive Strahlungsleistung ist das Produkt der in eine Sendeantenne eingespeisten Leistung multipliziert mit deren Antennengewinn. Wird keine Richtung angegeben, gilt der Wert für die Hauptstrahlrichtung der Sendeantenne, in der gleichzeitig ihr Antennengewinn am größten ist. Vorzugsweise liegt der volle Öffnungswinkel der Antenne eines Lesegerätes nahe bei 70°, so dass in einem Winkel von 35° zur Hauptstrahlrichtung noch mindestens die Hälfte der maximalen Leistung abgestrahlt wird.

In einem bevorzugten Ausführungsbeispiel der Erfindung verwendet das RFID-System den sogenannten 4-Kanal-Plan, bei dem nur auf 4 von 10 Hochleistungskanälen gesendet wird, wobei es sich nach den derzeitig geltenden Funk-Regularien um die Kanäle 4, 7, 10 und 13 handelt, wenn die ETSI-Norm EN 302 208 in der neusten Version (V 1.2.1) in geltendes Recht umgesetzt wurde. Dadurch kann das System von der so genannten "Listen Before Talk"-Regel (LBT) befreit werden, die in Europa dazu dient, das dem UHF-Bereich zur Verfügung stehende sehr schmale Frequenzband besser zwischen den diversen Nutzern aufzuteilen. Um eine schnelle Zuteilung der Frequenz für die neue Technologie zu ermöglichen, schreibt die LBT-Regel vor, dass ein Lesegerät vor dem Senden prüfen muss, ob ein anderer Dienst im Kanal arbeitet. Ist dies der Fall, muss es auf einen anderen Kanal ausweichen. Zudem dürfen die Lesegeräte nur vier Sekunden lang senden, bevor sie wieder das Vorhandensein anderer Nutzungen prüfen müssen. Da dies in der Praxis zu Problemen führt, hat sich der 4-Kanal-Plan für die Erfindung als vorteilhaft erwiesen, da zwar nur auf 4 Kanälen gesendet werden darf, die LBT-Regel jedoch nicht berücksichtigt werden muss. Der Betrieb anderer RFID-Systeme auf UHF-Frequenzen im Bereich des erfindungsgemäßen Systems sollte in diesem Fall jedoch vermieden werden, um die Lokalisierungsgenauigkeit und die Zuverlässigkeit der aus den RFID-Signalen gewonnenen Aussagen nicht zu beinträchtigen. Jedoch können auf den anderen Kanälen parallel zum 4-Kanal-Betrieb der RFID-Anwendungen leistungsschwache Funkanwendungen mit einer kurzen Reichweite, sogenannte Short Range Devices (SRD), betrieben werden.

Die beiden in dem Ausführungsbeispiel der Fig. 1 verwendeten Lesegeräte 30 und 31 sind oberhalb der drei Industriepaletten 20, 21 und 22 an den Positionen L1 und L2 angebracht. Die Lesegeräte sind dabei so über die Länge des Regalbodens 10 angeordnet, dass die ausgestrahlten Wechselfelder 40 und 41 der beiden Lesegeräte 30 und 31 die Transponder 50, 51 und 52 an allen drei Paletten erfassen können. Dabei sind die Positionen L1 und L2 so gewählt, dass ein Transponder 51 an einer mittleren Palette I-P2 stets von beiden Lesegeräten 30 und 31 erfasst wird, wenn dieser Stellplatz II besetzt ist, während die Transponder 50 und 52 auf den äußeren Positionen I und III nur von dem jeweiligen Lesegerät auf dieser Seite erfasst werden können.

Durch diese Anordnung gemäß Fig. 1 ist es mit zwei Lesegeräten 30 und 31 möglich, die Position von maximal drei Industriepaletten auf drei Positionen I, II und III auf dem Regalboden 11 verlässlich zu bestimmen. Dazu sind die Lesegeräte 30 und 31 an eine nicht dargestellte zentrale Datenverarbeitungsanlage angeschlossen, in welcher eine Logik hinterlegt ist, mit welcher die RFID-Signale entsprechend ausgewertet werden können. In dem dargestellten Fall beinhaltet diese Logik, dass wenigstens eine Auswertung erfolgt, welche Transponder ausschließlich von einem der beiden Lesegeräte erfasst wurden. Der Transponder 50, der aufgrund der Reichweite des Wechselfeldes 40 nur von dem linken Lesegerät 30 erfasst wurde, kann sich nur links auf dem ersten Stellplatz I befinden, so dass in der Datenverarbeitungsanlage als Position der Palette I-P1 mit diesem Transponder 50 die Position I vermerkt wird. Diese Palette I-P1 kann sich nicht auf dem mittleren Stellplatz II befinden, da der zugehörige Transponder 50 sonst auch von dem anderen Lesegerät 31 erfasst worden wäre, und auf dem rechten Stellplatz III kann sich diese Palette I-P1 ebenfalls nicht befinden, da sie sonst von dem zweiten Lesegerät 31 erfasst worden wäre bzw. nicht von dem ersten Lesegerät 30 erfasst werden konnte.

Der Transponder 52, der aufgrund der Reichweite des Wechselfeldes 41 nur von dem rechten Lesegerät 31 erfasst wurde, kann sich dagegen aufgrund der gleichen Logik nur rechts auf dem Stellplatz III befinden, was in der Datenverarbeitungsanlage als Position der zugehörigen Palette I-P3 mit diesem RFID-Transponder vermerkt wird. Der Transponder 51 hingegen wird im Überschneidungsbereich der beiden Wechselfelder 40 und 41 von beiden Lesegeräten 30 und 31 erfasst, was von der Logik so gewertet werden kann, dass sich die Palette I-P2 mit diesem Transponder 51 auf der mittleren Position II befinden muss, denn nur für diese Position kann eine solche Doppelerfassung eintreten.

Durch den beschriebenen Aufbau kann somit für drei Industrieplatten verlässlich deren Position auf dem Regalboden 10 bestimmt und für die weitere Verwendung in einem Überwachungssystem hinterlegt werden. Dabei müssen nur zwei Lesegeräte eingesetzt werden, was einen Vorteil gegenüber Lösungen darstellt, bei denen beispielsweise über jedem definierten Stellplatz auf einem Regalboden ein Lesegerät angeordnet ist. Außerdem können Überschneidungen von Wechselfeldern und dadurch entstehende Doppelerfassungen vorteilhaft dazu genutzt werden, mittels einer entsprechenden Logik eine Positionsbestimmung durchzuführen. Dabei sind die beiden Lesegeräte möglichst so an den Positionen L1 und L2 oberhalb der Paletten angeordnet, dass ihre Wechselfelder die Paletten so abdecken, dass auch in den Randbereichen noch eine genaue Erfassung möglich ist.

Sind benachbart zum Regalboden 10 weitere Regalböden links und/oder rechts davon mit einem RFID-System ausgestattet, so muss für eine genaue Positionsbestimmung der Paletten grundsätzlich gewährleistet werden, dass sich die Erfassungsbereiche der jeweils benachbarten Regalböden nicht überschneiden. Zudem dürfen keine Transponder auf Gütern erfasst werden, die im Gang vor dem Regalboden 10 transportiert werden. Vielmehr sind die Transponder ausschließlich dann zu erfassen, wenn die Güter in das Regal eingelagert oder aus dem Regal ausgelagert werden oder statisch auf dem Regalboden 10 lagern. Dies kann beispielsweise durch die Wahl geeigneter Sendeleistungen der Lesegeräte realisiert werden.

Auf einem Regalboden 10 können aber nicht nur Industriepaletten, sondern beispielsweise auch Europaletten gelagert werden, die mit Abmessungen von 1200mm x 800mm weniger breit sind als Industriepaletten. Bedingt durch die anderen Abmessungen finden auf dem gleichen Regalboden 10 somit gegebenenfalls vier Europaletten Platz, wie es schematisch in Fig. 2 dargestellt ist. Somit ergibt sich auch eine höhere Anzahl von definierten Stellplätzen A, B, C und D, an denen die vier Europaletten 23, 24, 25 und 26 (E-P1, E-P2, E-P3, E-P4) gelagert werden können, die mit RFID-Transpondern 53, 54, 55 und 56 versehen sind. Wird für eine solche Anordnung die Anzahl und Anordnung der Lesegeräte 30 und 31 beibehalten, ist eine eindeutige Positionsbestimmung gemäß der oben beschriebenen Vorgehensweise nicht mehr möglich, was anhand der Fig. 2 erläutert werden soll.

Wie in Fig. 2 ersichtlich, können zwar die Positionen A und B der beiden Paletten E-P1 und E-P2 mit den Transpondern 53 und 54 von den Positionen C und D der beiden Paletten E-P3 und E-P4 mit den Transpondern 55 und 56 genau bestimmt werden, da die beiden Paletten E-P1 und E-P2 mit den Transpondern 53 und 54 mit dem Wechselfeld 40 des linken Lesegerätes und die beiden Paletten E-P3 und E-P4 mit den Transpondern 55 und 56 mit dem Wechselfeld 41 des rechten Lesegerätes erfasst werden. Das Wechselfeld 40 kann jedoch nicht zwischen den Transponder 53 und 54 unterscheiden, so dass die beiden Paletten E-P1 und E-P2 auch nicht eindeutig den Positionen A und B zugeordnet werden können. Gleiches gilt auch für das Wechselfeld 41, das nicht zwischen den Transponder 55 und 56 unterscheiden kann, so dass die beiden Paletten E-P3 und E-P4 auch nicht eindeutig den Positionen C und D zugeordnet werden können. Somit kann lediglich ermittelt werden, ob sich eine oder zwei Paletten jeweils auf der linken oder rechten Seite des Regalbodens 10 befinden.

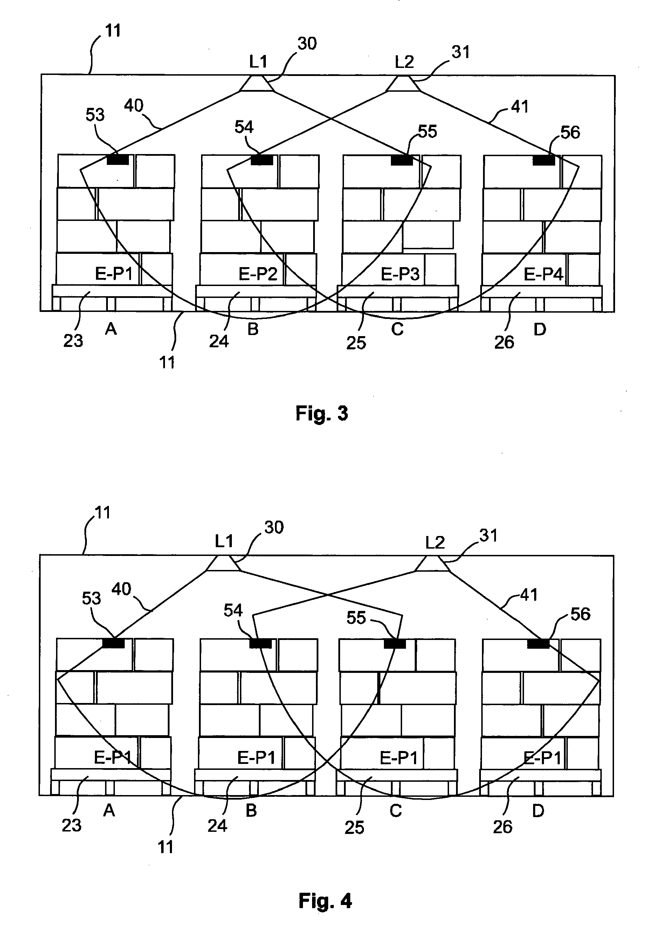

Um die Position von Gütern auf einem Regalboden 10 mit variabler Anzahl von definierten Stellplätzen bestimmen zu können, ist daher erfindungsgemäß vorgesehen, dass die Lesegeräte 30 und 31 entlang des Regalbodens 10 verschiebbar ausgebildet sind, so dass die Positionen L1 und L2 der Lesegeräte variabel sind. Durch diese Verschiebbarkeit kann die Symmetrie der Situation in Fig. 2 aufgehoben und die Lesegeräte so platziert werden, dass die beschriebene Logik unter Heranziehung weiterer Schritte erneut angewendet werden kann. Die dadurch erzielte Situation ist in Fig. 3 dargestellt, wobei die beiden Lesegeräte 30, 31 nach innen verschoben wurden. Bei dieser Verschiebung der Positionen L1 und L2 der Lesegeräte 30 und 31 zur Mitte des Regalbodens 10 hin überschneiden sich die Wechselfelder 40 und 41 der beiden Lesegeräte nun wieder so, dass die beiden mittleren Transponder 54 und 55 wieder von beiden Lesegeräten 30 und 31 erfasst werden.

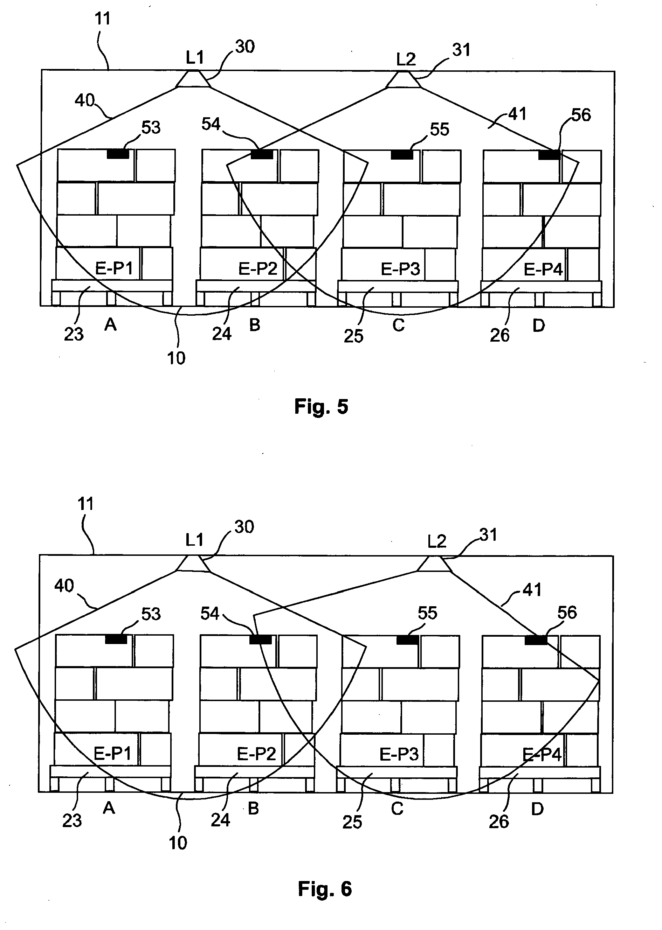

Der gleiche Effekt kann je nach Abmessungen des Systems und der Parameter, beispielsweise der Sendeleistung, der Lesegeräte 30 und 31 eintreten, wenn die Lesegeräte 30 und 31 ergänzend oder alternativ zu einer Verschiebbarkeit auch schwenkbar ausgeführt sind. Dies ist in der Fig. 4 dargestellt, in der beide Lesegeräte 30 und 31 in Richtung der Mitte des Regalboden geschwenkt dargestellt sind. Möglich ist dabei auch, beide Lesegeräte 30 und 31 in die gleiche Richtung zu schwenken und auszurichten, um eine Unterscheidung der Transponder zu ermöglichen. Es kann jedoch auch vorgesehen sein, dass für ein Lesegerät 30 an der Position L1 die Position und Ausrichtung nicht verändert wird, sondern nur das zweite Lesegerät 31 entsprechend verschoben wird, wie es in der Fig. 5 dargestellt ist, wobei im Vergleich zur Situation in Fig. 2 nur das rechte Lesegerät 31 nach links verschoben wurde. Auch eine einzelne Verschwenkbarkeit eines Lesegeräts 31 ist denkbar, um einen Zustand, in dem nicht beide mittleren Transponder 54 und 55 von beiden Lesegeräten erfasst werden können, in einen Zustand umzuwandeln, in dem dies der Fall ist (siehe Fig. 6).

Die Verschiebung eines Lesegerätes kann beispielsweise über eine Schiene an der Halterung 11 erfolgen, entlang der das Lesegerät direkt manuell verschoben werden kann. Möglich ist auch eine Verschiebung mittels Zugseilen, die manuell entfernt von dem jeweiligen Lesegerät betätigt werden können. Dies ist insbesondere für Lesegeräte an hohen Regalböden geeignet, die nur schwer direkt zu erreichen sind. Ferner kann die Verschiebung auch automatisch erfolgen und beispielsweise durch einen Motor bewirkt werden. Zudem besteht die Möglichkeit, nur eine begrenzte Anzahl von Positionen für die Lesegeräte vorzusehen, indem in der Halterung 11 mehrere Bohrungen vorgesehen sind, in denen das Lesegerät mittels geeigneter Befestigungsmittel, wie beispielsweise Schrauben, befestigt werden kann.

Die Schwenkbarkeit eines Lesegerätes kann beispielsweise durch Scharniere oder Gelenke erreicht werden, über welche das Lesegerät gelagert ist. Dabei kann das Lesegerät wenigstens um eine Achse schwenkbar ausgebildet sein, wenn beispielsweise Scharniere eingesetzt werden. Es kann aber auch beliebig um mehrere Achsen schwenkbar sein, wenn beispielsweise Kugelgelenke eingesetzt werden. Auch das Schwenken eines Lesegerätes kann manuell oder motorgetrieben erfolgen. Weiterhin ist es möglich, anstelle von Scharnieren oder Gelenken eine separate Halterung für die Lesegeräte vorzusehen, die den Schwenkwinkel für das Lesegerät fest vorgibt und die durch eine Halterung mit einem anderen fest vorgegebenen Schwenkwinkel ersetzt werden kann. Zum Einstellen eines anderen Schwenkwinkels muss hierbei das Lesegerät mit der Halterung demontiert werden, die Halterung muss durch eine andere Halterung ausgetauscht werden und anschließend muss das Lesegerät mit der neuen Halterung wieder montiert werden.

Allgemein zu beachten ist, dass die Lesegeräte so an der Halterung 11 befestigt sein müssen, dass eine Palette, die die Halterung 11 nur partiell belastet, nicht zu einer Verkippung oder zu einer transversalen Verschiebung der Lesegeräte führt. Um ein Lesegerät bis zu einer vorgegebenen Position zu verschieben bzw. in eine vorgegebene Lage zu schwenken, können Anschläge oder sonstige Mittel vorgesehen sein, um das Lesegerät entsprechend auszurichten.

In den Zuständen der Figuren 3 bis 6 kann somit erreicht werden, dass für die beiden äußeren Transponder 53 und 56 bestimmt werden kann, dass sich die zugehörigen Paletten 23 und 26 an den Positionen A und D befinden, da nur an diesen beiden Positionen Transponder ausschließlich von dem jeweiligen Lesegerät auf dieser Seite erfasst werden können. Für die beiden mittleren Transponder 54 und 55 ist ferner nun zwar klar, dass sie sich nicht an einer Palette auf einer der Außenpositionen A oder D befinden, es ist jedoch unklar, ob sie sich an einer Palette an der Position B oder an der Position C befinden, da beides möglich wäre.

Zusätzlich zu der Verschiebbarkeit und/oder Schwenkbarkeit der Lesegeräte 30 und 31 ist daher erfindungsgemäß vorgesehen, dass das Energieniveau des elektromagnetischen Wechselfeldes wenigstens eines Lesegerätes innerhalb eines von zwei Randwerten begrenzten Bereiches variiert werden kann. Durch diese Variation des Energieniveaus des Wechselfeldes eines Lesegerätes ändert sich die Reichweite, innerhalb der Transponder von einem Lesegerät erfasst werden können. Durchläuft ein von einem Lesegerät erzeugtes Wechselfeld beispielsweise mehrere Zwischenwerte zwischen einem maximalen und einem minimalen Energieniveau, tritt der Fall ein, dass ein Transponder bei einem höheren Energieniveau noch gelesen werden kann, während er ab einem bestimmten niedrigeren Energieniveau nicht mehr erfasst wird. Auch diese Informationen werden von der Logik der Datenverarbeitungseinheit verarbeitet und können dazu genutzt werden, um zu ermitteln, ob sich die in der Mitte erfassten Transponder 54 und 55 an einer Palette auf der Position B oder an einer Palette auf der Position C befinden.

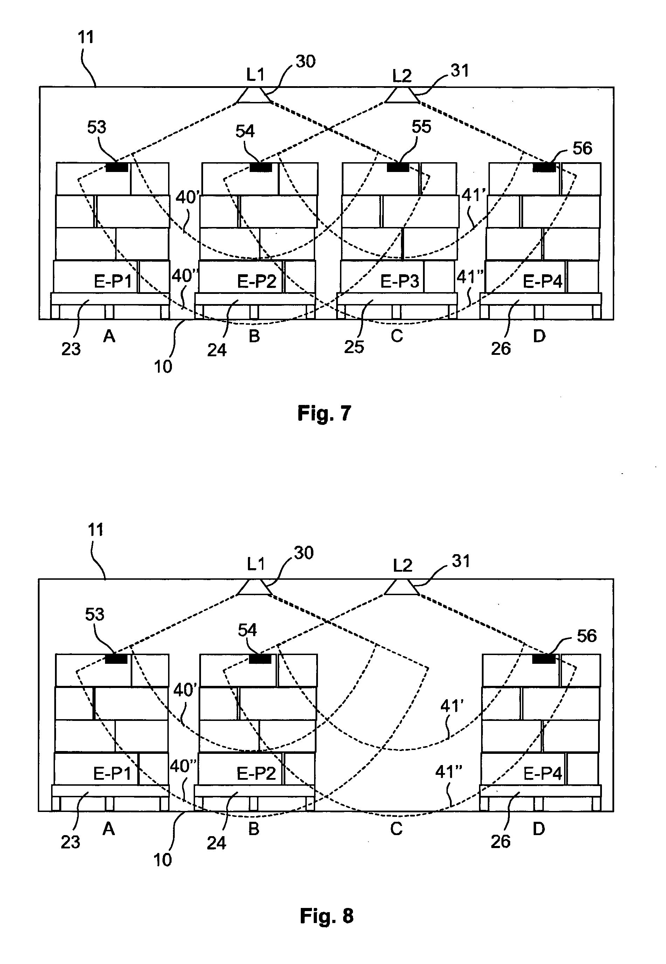

Dieser Vorgang soll beispielhaft anhand der Figur 7 erläutert werden, in der die schematisch dargestellten Wechselfelder beider Lesegeräte 30 und 31 zwischen einem maximalen Wert und einem minimalen Wert variiert werden. Beispielsweise kann die Leistung eines Lesegerätes schrittweise von 2 Watt (ERP) auf 50 Milliwatt (ERP) abgesenkt werden. Dabei können die Schritte für das Absenken sowohl gleich als auch unterschiedlich groß gewählt werden. Beim maximalen Energieniveau werden dann Wechselfelder 40" und 41" mit großer Reichweite erzeugt. Alle Transponder in diesem Bereich können somit erfasst werden. Bis zum minimalen Energieniveau reduziert sich der Erfassungsbereich auf Wechselfelder 40' und 41' mit einer geringeren Reichweite, so dass einzelne Transponder gegebenenfalls nicht mehr erfasst werden können. Die daraus gewonnenen Informationen werden vorzugsweise zur Bestimmung der entsprechenden Position der beiden mittleren Transponder 54 und 55 und der zugehörigen Paletten eingesetzt.

Wie aus Fig. 7 ersichtlich, können die beiden Transponder 54 und 55 innerhalb der Wechselfelder 40" und 41" mit maximalem Energieniveau gelesen werden. Spätestens bei den Wechselfeldern 40' und 41' mit dem niedrigen Energieniveau ist dies nicht mehr der Fall, sondern der linke Transponder 54 kann nur noch von dem linken Lesegerät 30 gelesen werden, während der rechte Transponder 55 nur noch von dem rechten Lesegerät 31 gelesen werden kann. Daraus lässt sich schließen, dass sich der linke Transponder 54 näher an dem linken Lesegerät 30 als an dem rechten Lesegerät 31 befindet und umgekehrt, was wiederum eindeutig darauf schließen lässt, dass sich die Palette 24 mit dem Transponder 54 an der Position B befindet, während sich die Palette 25 mit dem Transponder 55 an der Position C befindet. Somit können durch eine Verschiebung und/oder Schwenkung der Lesegeräte und der Anwendung einer Variation des Energieniveaus der Wechselfelder der Lesegeräte auf dem gleichen Regalboden 10 auch vier Europaletten lokalisiert werden, ohne dass die Anzahl der Lesegeräte erhöht werden muss.

Das Gleiche gilt für eine Situation, in der nicht alle Stellplätze auf dem Regalboden 10 mit Paletten belegt sind, wie es beispielsweise in der Fig. 8 dargestellt ist. In dieser Situation ist beispielsweise die Position C leer, aber es kann ohne Variation des Energieniveaus nicht eindeutig ermittelt werden, an welcher Position sich der von beiden Lesegeräten 30, 31 erfasste Transponder 54 der Palette E-P2 befindet. Es kann zwar ermittelt werden, dass er sich auf einer der beiden mittleren Positionen B oder C befindet, da dieser Transponder 54 von beiden Lesegeräten 30 und 31 erfasst wird, aber eine genauere Lokalisierung ist nicht möglich. Daher kann auch hier die Variation des Energieniveaus herangezogen werden, um dies analog zur vorherigen Beschreibung durchzuführen. Da das Lesegerät 31 innerhalb des Wechselfeldes 41' mit dem niedrigen Energieniveau den Transponder 54 nicht mehr erfasst, das Lesegerät 30 den Transponder selbst im Wechselfeld 40' aber noch lesen kann, lässt dies darauf schließen, dass sich der Transponder 54 an einer Palette an der Position B befindet.

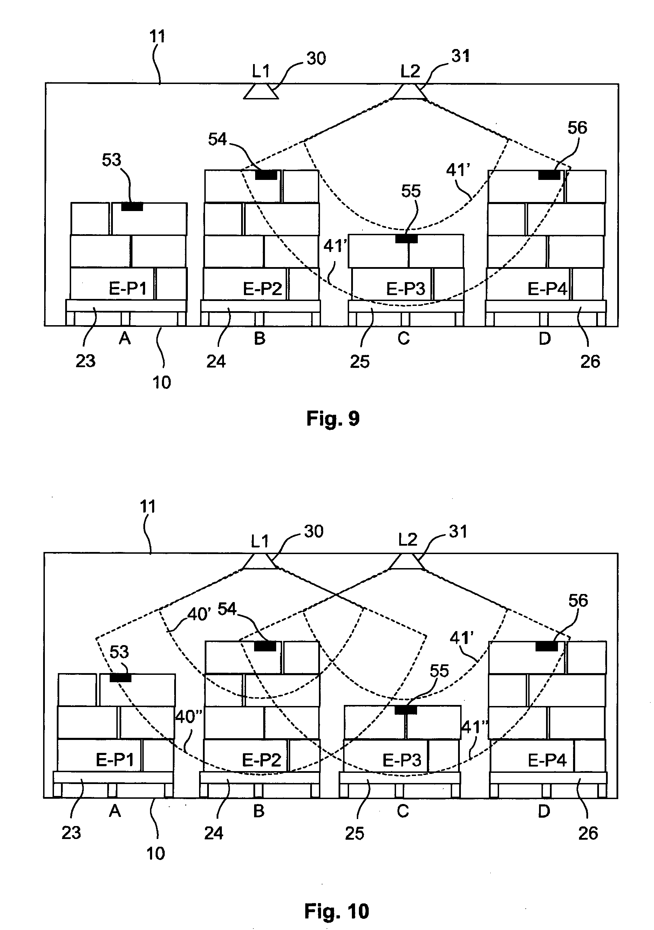

Es kann dabei ausreichend sein, die Variation des Energieniveaus eines Wechselfeldes nur an einem der Lesegeräte vorzusehen, da dies für viele Anwendungsfälle ausreicht, um eine genaue Positionsbestimmung durchführen zu können. Insbesondere für Paletten mit unterschiedlichen Höhen ist jedoch oftmals nur basierend auf der Ermittelung des ungefähren Abstands zwischen einem Lesegerät und einem Transponder keine eindeutige Aussage darüber zu treffen, ob sich der Transponder an einer Palette unterhalb des betreffenden Lesegerätes befindet oder doch an einer Palette an einer benachbarten Position. Eine solche Situation ist beispielsweise in der Fig. 9 dargestellt. Durch Variation des Energieniveaus des Wechselfeldes nur des Lesegerätes 31 zwischen Reichweiten eines großen Feldes 41" und eines kleineren Feldes 41' ist ermittelbar, dass die mittleren Transponder 54 und 55 innerhalb des stärkeren Feldes 41" beide noch erfasst werden können, während sie innerhalb des schwächeren Feldes 41' nicht mehr erfasst werden können. Der Abstand zwischen dem Transponder 54 und dem Lesegerät 31 entspricht dabei jedoch ungefähr dem Abstand zwischen dem Transponder 55 und dem Lesegerät 31, da sich der Transponder 54 auf einer sehr hohen Palette 24 befindet, während sich der Transponder 55 auf einer sehr niedrigen Palette 25 befindet. In dieser Situation würde die Variation des Energieniveaus des Wechselfeldes nur dieses einen Lesegerätes 31 somit nicht ausreichen, um die Position der beiden mittleren Transponder 54 und 55 und ihrer zugehörigen Paletten E-P2 und E-P3 auf dem Regalboden 10 eindeutig zu bestimmen. Daher ist für einen solchen Anwendungsfall mit unterschiedlich hohen Gütern vorzugsweise vorgesehen, dass die Energieniveaus beider Lesegerätes 30 und 31 variiert werden können, wie es in der Fig. 10 dargestellt ist.

Aus Fig. 10 ist ersichtlich, dass durch die Variation der Energieniveaus beider Lesegeräte 30 und 31 nun eindeutig ermittelt werden kann, dass sich der Transponder 55 näher an dem Lesegerät 31 befinden muss als am Lesegerät 30, da dieser Transponder 55 innerhalb des kleineren Wechselfeldes 40' des Lesegerätes 30 nicht mehr erfasst wird, dies jedoch für den näheren Transponder 54 noch der Fall ist. Aus dieser zusätzlichen Information kann dann ermittelt werden, dass sich der Transponder 54 an einer Palette auf der Position B befinden muss, während sich der Transponder 55 an einer Palette auf der Position C befinden muss.

Ob für eine Positionsbestimmung das Wechselfeld nur eines Lesegerätes oder beider Lesegeräte variiert wird, kann standardmäßig festgelegt sein oder bei Bedarf selektiv angesteuert werden. Eine selektive Ansteuerung kann beispielsweise erfolgen, wenn eine Situation wie in Fig. 9 detektiert wird, bei der die Variation des Energieniveaus eines Lesegerätes nicht ausreicht. Dann kann die Variation des Energieniveaus des anderen Lesegerätes hinzugeschaltet werden.

Ferner kann vorgesehen sein, dass die Variation des Energieniveaus eines oder mehrerer Lesegeräte nicht fortlaufend durchgeführt wird, sondern nur, wenn eine neue Palette auf dem Regalboden detektiert wurde. Falls beispielsweise zu einem ersten Messzeitpunkt die Positionen aller Paletten auf dem Regalboden eindeutig bestimmt werden konnten und beim nächsten Messzeitpunkt keine neuen Transponder detektiert werden und auch keine Paletten mit Transpondern entfernt wurden, muss keine Variation des Energieniveaus der Lesegeräte erfolgen, falls davon ausgegangen werden kann, dass sich die Positionen der Paletten untereinander nicht verändert haben können. Wird dann zu einem weiteren Messzeitpunkt festgestellt, dass ein neuer Transponder hinzugekommen ist, kann die Variation des Energieniveaus für ein oder zwei Lesegeräte durchgeführt werden, um die Position des neuen Transponders einmalig genau zu bestimmen.

Auch wenn eine Palette den Regalboden 10 verlässt, muss nicht unbedingt eine Variation des Energieniveaus für die verbleibenden Paletten durchgeführt werden. Wird beispielsweise zu einem weiteren Messzeitpunkt festgestellt, dass einer der beiden äußeren Transponder 53 oder 56 nicht mehr detektiert werden kann, da zugehörige Paletten entnommen wurden, muss keine Variation des Energieniveaus durchgeführt werden, da sich an der Position der beiden mittleren Paletten offensichtlich nichts geändert hat.

Auch wenn nur eine der beiden mittleren Paletten 24 oder 25 entfernt und durch eine andere Palette ersetzt wird, was durch das Erfassen eines bisher unbekannten Transponders auf einer der mittleren Positionen festgestellt werden kann, während ein bisher auf der Position B oder C erfasster Transponder nicht mehr erfasst werden kann, muss dies nicht zwingend eine Variation des Energieniveaus erfordern. Für den verbleibenden Transponder kann davon ausgegangen werden, dass sich die zugehörige Palette noch an der selben Stelle auf dem Regalboden 10 befindet, so dass sich der neu erfasste Transponder zwangsläufig auf der anderen mittleren Position befinden muss. Nur wenn beide mittleren Paletten annähernd gleichzeitig entfernt und durch neue Paletten ersetzt werden, ist erneut unklar, wie die Positionen in der Mitte des Regalbodens 10 belegt sind, so dass nun eine Variation des Energieniveaus durchgeführt werden sollte. Das wäre auch erforderlich, wenn eine mittlere Palette entfernt wurde, die andere mittlere Palette auf diese Position verschoben wurde und auf der so frei gewordenen mittleren Position eine neue Palette abgestellt wurde.

Die beschriebene Vorgehensweise zur Vermeidung der Variation des Energieniveaus von Lesegeräten kann jedoch nur gewählt werden, wenn die Vorgänge im Lager so sind, dass immer noch mit ausreichender Genauigkeit auf die Position einer Palette im Regalsystem geschlossen werden kann. Die in der Datenverarbeitungsanlage hinterlegte Logik wertet somit vorzugsweise nicht immer wieder alle Signale aus, um immer wieder neu eine vollständige Positionsbestimmung auf einem Regalboden 10 durchzuführen, sondern einmal ermittelte Positionen werden von der intelligenten Datenverarbeitungsanlage dazu verwendet, um logisch zu ermitteln, welche Änderungen auf dem Regalboden 10 eingetreten sein können, wenn Transponder sich entfernen oder neu hinzukommen. Die Variation eines Energieniveaus wird somit vorzugsweise nur bei Bedarf durchgeführt, oder wird angewendet, um zwischenzeitlich aktuell hinterlegte Positionen zu bestätigen und die Wahrscheinlichkeit ihrer Richtigkeit zu erhöhen. Da die Variation des Energieniveaus mehrerer Lesegeräte innerhalb eines größeren Lagers und die entsprechende Auswertung der Signale sehr lange dauern kann, hat diese Vorgehensweise den Vorteil, dass beispielsweise eine Inventurmessung über alle Lesegeräte so schnell wie möglich durchgeführt werden kann. Bekannte Positionen von Paletten müssen dabei nicht nochmals durch eine Variation des Energieniveaus von Lesegeräten bestätigt werden, sondern für diese Paletten muss nur bestätigt werden, dass sie sich noch auf dem Regalboden befinden. Lediglich für neu hinzugekommene Transponder muss gegebenenfalls eine Variation des Energieniveaus einzelner oder aller Lesegeräte eines Regalbodens 10 oder Lagers durchgeführt werden, wenn sich dies durch keine andere Logik verhindern lässt bzw. die Wahrscheinlichkeit der richtigen Lokalisierung erhöht werden soll.

Wenn auf dem Regalboden 10 nach vier Europaletten wieder drei Industriepaletten gelagert werden sollen, können die Lesegeräte 30 und 31 für eine Erfassung der einzelnen Paletten einfach wieder in die Positionen L1 und L2 gemäß Fig. 1 gebracht werden. Dies ist insbesondere dann erforderlich, wenn die drei Industriepaletten unterschiedliche Höhen aufweisen. Würden hier einfach nur die Positionen L1 und L2 der Lesegeräte 30 und 31 für vier Europaletten übernommen werden, würde dies zu einer hohen Ungenauigkeit bei der Ermittlung und Zuordnung der Stellplätze I bis III zu den einzelnen Paletten I-P1 bis I-P3 führen. Mit der Einstellung der Positionen L1 und L2 gemäß Fig. 1 für die beiden Lesegeräte 30 und 31 hingegen wird sichergestellt, dass jeder Industriepalette I-P1 bis I-P3 der richtige Stellplatz I bis III auf dem Regalboden 10 zugeordnet wird.

### Bezugszeichenliste:

- 10: Lagerebene, Regalboden
- 11: Halterung, Schiene
- 20, 21, 22: Industriepalette
- 23, 24, 25, 26: Europalette
- 30, 31: Lesegerät
- 40,41: Wechselfeld
- 40', 41': Wechselfeld mit minimalem Energieniveau
- 40", 41": Wechselfeld mit maximalem Energieniveau
- 50, 51, 52, 53, 54, 55, 56: RFID-Transponder, Transponder

- I-P1, I-P2, I-P3: Industriepalette
- I, II, III: Position/Stellplatz Industriepalette
- E-P1, E-P2, E-P3, E-P4: Europalette
- A, B, C, D: Position/Stellplatz Europalette

- L1, L2: Position Lesegerät

## Patentansprüche

1. System zur Lagerung und Überwachung von Gütern, umfassend wenigstens eine Lagerebene (10), auf der die Güter platzierbar sind, wobei die Güter jeweils mit wenigstens einem passiven RFID-Transponder versehen sind und das System mehrere Lesegeräte (30, 31) zur Erfassung dieser RFID-Transponder umfasst, wobei jeder Lagerebene (10) wenigstens zwei Lesegeräte (30, 31) zugeordnet sind, und die Lesegeräte (30, 31) in Verbindung mit einer Datenverarbeitungseinheit stehen, welche Mittel zur Auswertung erfasster RFID-Signale der RFID-Transponder aufweist und,
**dadurch gekennzeichnet,**
**dass** die Güter an definierten Positionen platzierbar sind, so dass jedes Gut einer definierten Position zugeordnet ist und die definierten Positionen für Güter nebeneinander in einer Reihe auf einer Lagerebene (10) angeordnet sind, und die Lesegeräte (30, 31) entlang dieser Reihe von definierten Positionen angeordnet sind und für eine Mehrfacherfassung von RFID-Transpondern entlang dieser Reihe zweinander verschiebbar und/oder in Bezug zu dieser schwenkbar ausgeführt sind und dass wenigstens ein Lesegerät (30, 31) so ausgeführt ist, dass das Energieniveau des ausgestrahlten Wechselstromfeldes dieses Lesegerätes (30, 31) variierbar ist.

2. System nach Anspruch 1,
**dadurch gekennzeichnet,**
**dass** das wenigstens eine Lesegerät (30, 31) durch Verschieben und/oder Verschwenken aus einer ersten Lage in eine zweite Lage bewegbar ist, wobei in der ersten Lage bei Belegung aller Positionen der zugeordneten Lagerebene (10) mit Gütern kein RFID-Transponder gleichzeitig von zwei benachbarten Lesegeräten (30, 31) erfassbar ist, während in der zweiten Lage bei Belegung aller Positionen dieser Lagerebene (10) mit Gütern wenigstens ein RFID-Transponder gleichzeitig von zwei benachbarten Lesegeräten (30, 31) erfassbar ist.

3. System nach einem oder beiden der Ansprüche 1 und 2,
**dadurch gekennzeichnet,**
**dass** die Energiehöhe des ausgestrahlten Wechselstromfeldes bei dem wenigstens einen Lesegerät (30, 31) so innerhalb eines von zwei Randwerten begrenzten Bereiches variierbar ist, dass bei Belegung aller Positionen der zugeordneten Lagerebene (10) mit Gütern wenigstens ein RFID-Transponder bei einem Wert der Energiehöhe von einem Lesegerät (30, 31) erfassbar ist, während der gleiche RFID-Transponder bei einem niedrigeren Wert der Energiehöhe nicht von diesem Lesegerät (30, 31) erfassbar ist.

4. System nach einem der Ansprüche 1 bis 3,
**dadurch gekennzeichnet,**
**dass** eine Lagerebene (10) horizontal verläuft und das wenigstens zwei Lesegeräte (30, 31) oberhalb der Lagerebene (10) und der Güter angeordnet sind, wobei die RFID-Transponder jeweils im oberen Bereich der Güter angebracht sind.

5. System nach Anspruch 4,
**dadurch gekennzeichnet,**
**dass** das wenigstens eine Lesegerät (30, 31) an einer Halterung (11) angeordnet ist, die parallel zur Lagerebene (10) verläuft, wobei die Halterung (11) eine Schiene umfasst, innerhalb der das wenigstens eine Lesegerät (30, 31) verschiebbar angebracht ist.

6. System nach einem der Ansprüche 1 bis 5,
**dadurch gekennzeichnet,**
**dass** das Energieniveau des Wechselfeldes des wenigstens einen Lesegerätes (30, 31) zwischen näherungsweise 2 Watt ERP und näherungsweise 50 Milliwatt ERP variierbar ist.

7. Verfahren zur Überwachung von Gütern mit einem System nach einem der Ansprüche 1 bis 6, bei dem Signale der Lesegerätes (30, 31) zur Auswertung an eine Datenverarbeitungseinheit übermittelt werden, wobei die Auswertung eine Zuordnung von RFID-Transpondern und den ihnen zugeordneten Gütern zu einer Position auf einer Lagerebene (10) beinhaltet,
**dadurch gekennzeichnet,**
**dass** wenigstens ein Lesegerät (30, 31) durch Verschieben und/oder Verschwenken aus einer ersten Lage in eine zweite Lage zur gleichzeitigen Erfassung von mindestens einem RFID-Transponder von zwei benachbarten Lesegeräten bei Belegung aller Positionen dieser Lagerebene (10) bewegt wird, wobei in der ersten Lage bei Belegung aller Positionen der zugeordneten Lagerebene (10) mit Gütern kein RFID-Transponder gleichzeitig von zwei benachbarten Lesegeräten (30, 31) erfassbar ist und eine Positionsbestimmung durch Unterscheidung zwischen einfach und zweifach erfassten RFID-Transpondern erfolgt, und dass in der zweiten Lage die Energiehöhe des ausgestrahlten Wechselstromfeldes bei wenigstens einem Lesegerät (30, 31) zwischen zwei Randwerten variiert wird, wobei wenigstens ein RFID-Transponder bei einem Wert der Energiehöhe von einem Lesegerät (30, 31) erfasst wird, während der gleiche RFID-Transponder bei einem niedrigeren Wert der Energiehöhe nicht von diesem Lesegerät (30, 31) erfasst wird.

8. Verfahren nach Anspruch 7,
**dadurch gekennzeichnet,**
**dass** die Datenverarbeitungseinheit bei der Auswertung von RFID-Signalen der Lesegeräte (30, 31) unterscheidet zwischen RFID-Transpondern, die von nur einem Lesegerät (30, 31) erfassbar sind und RFID-Transpondern, die gleichzeitig von zwei Lesegeräten (30, 31) erfassbar sind, und dass ein RFID-Transponder, der von nur einem Lesegerät (30, 31) erfasst wird, einer Position auf der Lagerebene (10) im Bereich dieses Lesegerätes (30, 31) zugeordnet wird, die außerhalb des Erfassungsgebietes der anderen Lesegeräte (30, 31) der jeweiligen Lagerebene (10) liegt, während ein RFID-Transponder, der gleichzeitig von zwei benachbarten Lesegeräten (30, 31) erfasst wird, einer Position zugeordnet wird, die im Schnittbereich der Erfassungsgebiete dieser zwei benachbarten Lesegeräte (30, 31) liegt.

9. Verfahren nach Anspruch 8,
**dadurch gekennzeichnet,**
**dass** ein RFID-Transponder, der von zwei benachbarten Lesegeräten (30, 31) erfasst wird, nach Variation des Energieniveaus wenigstens eines dieser beiden Lesegeräte (30, 31) derjenigen Position im Schnittbereich der Erfassungsgebiete dieser zwei benachbarten Lesegeräte (30, 31) zugeordnet wird, die näher an dem Lesegerät (30, 31) liegt, mit dem der betreffende RFID-Transponder sowohl bei einem höheren als auch bei einem niedrigeren Energieniveau erfasst wird.

10. Verfahren nach einem der Ansprüche 7 bis 9,
**dadurch gekennzeichnet,**
**dass** die Variation des Energieniveaus wenigstens eines Lesegerätes (30, 31) dadurch ausgelöst wird, dass ein bisher nicht erfasster RFID-Transponder auf der Lagerebene (10) von wenigstens einem Lesegerät (30, 31) erfasst wird.

11. Verfahren nach Anspruch 10,
**dadurch gekennzeichnet,**
**dass** die Variation des Energieniveaus wenigstens eines Lesegerätes (30, 31) dadurch ausgelöst wird, dass ein bisher nicht erfasster RFID-Transponders auf der Lagerebene (10) von zwei benachbarten Lesegeräten (30, 31) gleichzeitig erfasst wird.

12. Verfahren nach Anspruch 11,
**dadurch gekennzeichnet,**
**dass** bei der Variation des Energieniveaus wenigstens eines Lesegerätes (30, 31) das Energieniveau des Wechselfeldes dieses Lesegerätes (30, 31) schrittweise von näherungsweise 2 Watt ERP auf näherungsweise 50 Milliwatt ERP reduziert wird.

## Claims

1. A system for storing and monitoring goods, comprising at least one storage level (10) on which the goods can be placed, whereby each item is provided with at least one passive RFID transponder, and the system comprises several reading devices (30, 31) for detecting these RFID transponders, whereby each storage level (10) is associated with at least two reading devices (30, 31), and the reading devices (30, 31) are in communication with a data processing unit that has means for evaluating detected RFID signals of the RFID transponders, and **characterized in that**
the goods can be placed in defined positions so that each item is associated with a defined position, and the defined positions for goods are arranged next to each other in a row on a given storage level (10), and the reading devices (30, 31) are arranged along this row of defined positions, and, for purposes of a multiple detection of RFID transponders, they can be moved towards each other along this row and/or they are configured so as to pivot relative thereto, and **in that** at least one reading device (30, 31) is configured in such a way that the energy level of the emitted alternating current field of this reading device (30, 31) is variable.

2. The system according to claim 1,
**characterized in that**
the at least one reading device (30, 31) can be moved from a first location into a second location by being pushed and/or pivoted, whereby, in the first location, when all of the positions of the associated storage level (10) are occupied with goods, no RFID transponder can be detected simultaneously by two adjacent reading devices (30, 31), whereas in the second location, when all of the positions of this storage level (10) are occupied with goods, at least one RFID transponder can be detected simultaneously by two adjacent reading devices (30, 31).

3. The system according to one or both of claims 1 and 2,
**characterized in that**
the energy level of the emitted alternating current field of the at least one reading device (30, 31) is variable within a range limited by two boundary values **in that**, when all of the positions of the associated storage level (10) are occupied with goods, at least one RFID transponder can be detected by a reading device (30, 31) at a given value of the energy level, whereas the same RFID transponder cannot be detected by this reading device (30, 31) at a lower value of the energy level.

4. The system according to one of claims 1 to 3,
**characterized in that**
one storage level (10) runs horizontally and **in that** at least two reading devices (30, 31) are arranged above the storage level (10) and the goods, whereby the RFID transponders are each installed in the upper section of the goods.

5. The system according to claim 4,
**characterized in that**
the at least one reading device (30, 31) is arranged on a holder (11) that runs parallel to the storage level (10), whereby the holder (11) comprises a rail in which the at least one reading device (30, 31) is installed in such a way that it can move.

6. System according to one of claims 1 to 5,
**characterized in that**
the energy level of the alternating field of the at least one reading device (30, 31) can be varied between approximately 2 watts ERP and approximately 50 milliwatts ERP.

7. A method for monitoring goods with a system according to one of claims 1 to 6, in which signals of the reading device (30, 31) are transmitted to a data processing unit for evaluation, whereby the evaluation comprises an association of RFID transponders, and the goods associated with them, to a position on a storage level (10),
**characterized in that**
at least one reading device (30, 31) is moved from a first location into a second location by being pushed and/or pivoted for purposes of a simultaneous detection of at least one RFID transponder by two adj acent reading devices when all of the positions of this storage level (10) are occupied, whereby in the first location, when all of the positions of the associated storage level (10) are occupied with goods, no RFID transponder can be detected simultaneously by two adjacent reading devices (30, 31), and a position determination is carried out by differentiating between RFID transponders that have been detected one time and those that have been detected two times, and **in that**, in the second location, the energy level of the emitted alternating current field of at least one reading device (30, 31) varies between two boundary values, whereby at least one RFID transponder is detected by one reading device (30, 31) at a given value of the energy level, whereas the same RFID transponder is not detected by this reading device (30, 31) at a lower value of the energy level.

8. The method according to claim 7,
**characterized in that**,
when the data processing unit evaluates RFID signals of the reading devices (30, 31), it differentiates between RFID transponders that can be detected by only one reading device (30, 31) and RFID transponders that can be detected simultaneously by two reading devices (30, 31), and **in that** an RFID transponder that is detected by only one reading device (30, 31) is associated with a position on the storage level (10) in the range of this reading device (30, 31) that falls outside of the detection zone of the other reading devices (30, 31) of that particular storage level (10), whereas an RFID transponder that is detected simultaneously by two adjacent reading devices (30, 31) is associated with a position that falls in the intersection area of the detection zones of these two adjacent reading devices (30, 31).

9. The method according to claim 8,
**characterized in that**
an RFID transponder that is detected by two adjacent reading devices (30, 31) - after the energy level of at least one of these two reading devices (30, 31) has been varied - is associated with the position in the intersection area of the detection zones of these two adjacent reading devices (30, 31) that is closer to the reading device (30, 31) with which that particular RFID transponder is detected at a higher as well as at a lower energy level.

10. The method according to one of claims 7 to 9,
**characterized in that**
the variation of the energy level of at least one reading device (30, 31) is initiated in that an RFID transponder on the storage level (10) that had not yet been detected is detected by at least one reading device (30, 31).

11. The method according to claim 10,
**characterized in that**
the variation of the energy level of at least one reading device (30, 31) is initiated in that an RFID transponder on the storage level (10) that had not yet been detected is detected simultaneously by two adjacent reading devices (30, 31).

12. The method according to claim 11,
**characterized in that**,
when the energy level of at least one reading device (30, 31) is varied, the energy level of the alternating current field of this reading device (30, 31) is reduced incrementally from approximately 2 watts ERP to approximately 50 milliwatts ERP.

## Revendications

1. Système de stockage et de surveillance de produits, comprenant au moins un plan de stockage (10) sur lequel les produits peuvent être placés, dans lequel les produits sont chacun pourvus d'au moins un transpondeur RFID passif et le système comprend plusieurs lecteurs (30, 31) pour la détection de ces transpondeurs RFID, dans lequel au moins deux lecteurs (30, 31) sont associés à chaque plan de stockage (10) et les lecteurs (30, 31) sont en liaison avec un module de traitement de données qui présente des moyens pour évaluer des signaux RFID détectés des transpondeurs RFID et
**caractérisé en ce que**
les produits peuvent être placés en des positions définies de sorte que chaque produit est associé à une position définie et les positions définies pour des produits sont disposées les unes à côté des autres dans une rangée sur un plan de stockage (10), et les lecteurs (30, 31) sont disposés le long de cette rangée de positions définies et peuvent coulisser les uns par rapport les autres le long de cette rangée pour une détection multiple de transpondeurs RFID et/ou sont réalisés de manière pivotante par rapport à celle-ci, et qu'au moins un lecteur (30, 31) est réalisé de sorte que le niveau d'énergie du champ de courant alternatif émis par ce lecteur (30, 31) est variable.

2. Système selon la revendication 1,
**caractérisé en ce que**
l'au moins un lecteur (30, 31) peut être déplacé par coulissement et/ou pivotement d'une première position dans une seconde position, dans lequel, dans la première position, en cas d'occupation de toutes les positions du plan de stockage associé (10) par des produits, aucun transpondeur RFID ne peut être détecté simultanément par deux lecteurs voisins (30, 31), tandis que, dans la seconde position, en cas d'occupation de toutes les positions de ce plan de stockage (10) par des produits, au moins un transpondeur RFID peut être détecté simultanément par deux lecteurs voisins (30, 31).

3. Système selon une des revendications 1 et 2 ou les deux, **caractérisé en ce que**
la hauteur d'énergie du champ de courant alternatif émis par l'au moins un lecteur (30, 31) est variable au sein d'une plage limitée par deux valeurs limites de sorte qu'en cas d'occupation de toutes les positions du plan de stockage associé (10) par des produits, au moins un transpondeur RFID peut être détecté par un lecteur (30, 31) à une valeur de la hauteur d'énergie, tandis que le même transpondeur RFID ne peut être détecté par ce lecteur (30, 31) à une valeur inférieure de la hauteur d'énergie.

4. Système selon l'une quelconque des revendications 1 à 3, **caractérisé en ce qu'**
un plan de stockage (10) s'étend horizontalement et les au moins deux lecteurs (30, 31) sont disposés au-dessus du plan de stockage (10) et des produits, dans lequel les transpondeurs RFID sont chacun montés dans la région supérieure des produits.

5. Système selon la revendication 4,
**caractérisé en ce que**
l'au moins un lecteur (30, 31) est disposé sur un dispositif de fixation (11) qui s'étend parallèlement au plan de stockage (10), dans lequel le dispositif de fixation (11) comprend un rail au sein duquel l'au moins un lecteur (30, 31) est monté de manière coulissante.

6. Système selon l'une quelconque des revendications 1 à 5, **caractérisé en ce que**
le niveau d'énergie du champ alternatif de l'au moins un lecteur (30, 31) est variable entre approximativement 2 Watt ERP et approximativement 50 Milliwatt ERP.

7. Procédé de surveillance de produits avec un système selon l'une quelconque des revendications 1 à 6, dans lequel des signaux des lecteurs (30, 31) sont transmis pour évaluation à un module de traitement de données, dans lequel l'évaluation contient une association de transpondeurs RFID et des produits qui leur sont associés à une position sur un plan de stockage (10),
**caractérisé en ce qu'**
au moins un lecteur (30, 31) est déplacé par coulissement et/ou pivotement d'une première position vers une seconde position pour la détection simultanée d'au moins un transpondeur RFID par deux lecteurs voisins en cas d'occupation de toutes les positions de ce plan de stockage (10), dans lequel, dans la première position, en cas d'occupation de toutes les positions du plan de stockage associé (10) par des produits, aucun transpondeur RFID ne peut être détecté simultanément par deux lecteurs voisins (30, 31) et une détermination de position s'effectue par différenciation entre des transpondeurs RFID détectés une fois et deux fois, et que, dans la seconde position, la hauteur d'énergie du champ de courant alternatif émis par au moins un lecteur (30, 31) varie entre deux valeurs limites, dans lequel au moins un transpondeur RFID est détecté par un lecteur (30, 31) à une valeur de la hauteur d'énergie, tandis que le même transpondeur RFID ne peut être détecté par ce lecteur (30, 31) à une valeur inférieure de la hauteur d'énergie.

8. Procédé selon la revendication 7,
**caractérisé en ce que**
le module de traitement de données différencie lors de l'évaluation de signaux RFID des lecteurs (30, 31) entre des transpondeurs RFID qui ne peuvent être détectés que par un lecteur (30, 31) et des transpondeurs RFID qui peuvent être détectés simultanément par deux lecteurs (30, 31), et qu'un transpondeur RFID qui n'est détecté que par un lecteur (30, 31) est associé à une position sur le plan de stockage (10) dans la région de ce lecteur (30, 31) qui se situe en dehors de la région de détection des autres lecteurs (30, 31) du plan de stockage respectif (10), tandis qu'un transpondeur RFID qui est détecté simultanément par deux lecteurs voisins (30, 31) est associé à une position qui se situe dans la région de coupe des régions de détection de ces deux lecteurs voisins (30, 31).

9. Procédé selon la revendication 8,
**caractérisé en ce qu'**
un transpondeur RFID qui est détecté par deux lecteurs voisins (30, 31) est associé après variation du niveau d'énergie d'au moins un de ces deux lecteurs (30, 31) à la position dans la région de coupe des régions de détection de ces deux lecteurs voisins (30, 31) qui se situe plus près du lecteur (30, 31) avec lequel le transpondeur RFID concerné est détecté aussi bien à un niveau d'énergie supérieur qu'à un niveau d'énergie inférieur.

10. Procédé selon l'une quelconque des revendications 7 à 9, **caractérisé en ce que**
la variation du niveau d'énergie d'au moins un lecteur (30, 31) est déclenchée car un transpondeur RFID non détecté jusque là est détecté sur le plan de stockage (10) par au moins un lecteur (30, 31).

11. Procédé selon la revendication 10,
**caractérisé en ce que**
la variation du niveau d'énergie d'au moins un lecteur (30, 31) est déclenchée car un transpondeur RFID non détecté jusque là est détecté simultanément sur le plan de stockage (10) par deux lecteurs voisins (30, 31).

12. Procédé selon la revendication 11,
**caractérisé en ce que**,
lors de la variation du niveau d'énergie d'au moins un lecteur (30, 31), le niveau d'énergie du champ alternatif de ce lecteur (30, 31) est réduit progressivement d'approximativement 2 Watt ERP à approximativement 50 Milliwatt ERP.
